Europäisches Patentamt

European Patent Office

Office européen des brevets

(19)

(11) EP 0 713 479 B1

# (12) FASCICULE DE BREVET EUROPEEN

(45) Date de publication et mention
de la délivrance du brevet:
**16.09.1998 Bulletin 1998/38**

(21) Numéro de dépôt: **95923369.3**

(22) Date de dépôt: **12.06.1995**

(51) Int Cl.6: **C01G 43/01**, C01B 13/34

(86) Numéro de dépôt international:
**PCT/FR95/00765**

(87) Numéro de publication internationale:
**WO 95/34508 (21.12.1995 Gazette 1995/54)**

(54) **PROCEDE D'OBTENTION DE TRIOXYDE D'URANIUM PAR DENITRATION THERMIQUE DIRECTE DE NITRATE D'URANYLE**

VERFAHREN ZUR HERSTELLUNG VON URANTRIOXID DURCH DIREKTE THERMISCHE DENITRATION VON URANYLNITRATE

METHOD OF OBTAINING URANIUM TRIOXIDE BY DIRECTLY HEAT DENITRATING URANYL NITRATE

(84) Etats contractants désignés:
**BE DE ES FR GB PT SE**

(30) Priorité: **13.06.1994 FR 9407189**

(43) Date de publication de la demande:
**29.05.1996 Bulletin 1996/22**

(73) Titulaire: **COMURHEX**
**Société pour la Conversion de l'Uranium en Métal et Hexafluorure**
**F-78140 Velizy Villacoublay (FR)**

(72) Inventeurs:
• **SCHAAL, Gilbert**
  **F-11100 Narbonne (FR)**
• **FARON, Robert**
  **F-92400 Courbevoie (FR)**

(74) Mandataire: **Dubois-Chabert, Guy et al**
**c/o BREVATOME**
**25, rue de Ponthieu**
**75008 Paris (FR)**

(56) Documents cités:
**DE-A- 3 802 047**          **FR-A- 2 526 006**
**US-A- 2 981 592**

• **PATENT ABSTRACTS OF JAPAN vol. 7 no. 28 (C-149) ,4 Février 1983 & JP,A,57 183327 (MITSUBISHI KINZOKU)**
• **PROCEEDINGS OF THE INTERNATIONAL SYMPOSIUM ON FLUIDIZATION, 6 Juin 1967 EINDHOVEN, pages 769-781, RODRIGO OTERO 'fluidized bed calcination of uranyl nitrate solutions'**

## Description

La présente invention concerne un procédé d'obtention de trioxyde d'uranium à partir de nitrate d'uranyle par décomposition thermique du nitrate hexahydraté.

Dans son cycle du combustible, l'uranium peut notamment passer par le composé $UF_4$ qui est utilisé à deux fins. Le tétrafluorure d'uranium permet d'élaborer de l'uranium métal pour l'alimentation des réacteurs à uranium naturel. Il permet aussi l'obtention de l'hexafluorure $UF_6$ qui est la matière d'alimentation des usines d'enrichissement par diffusion gazeuse ou ultracentrifugation.

La conversion de l'uranium en $UF_4$ nécessite une étape de purification du fait que les concentrés d'uranium livrés aux usines de raffinage contiennent encore beaucoup d'impuretés. Lors de cette étape de purification, le concentré d'uranium est mis en solution dans de l'acide nitrique pour donner un nitrate d'uranyle impur qui est purifié par le phosphate tributylique (TBP). Le TBP permet d'extraire de la solution acide du nitrate d'uranyle pur.

Une fois en possession de l'uranium pur à l'état de nitrate en solution aqueuse, il faut lui redonner la forme solide pour le transformer, suivant les besoins, en bioxyde, en tétrafluorure ou en métal. L'uranium se trouvant à la valence VI, le produit intermédiaire obligatoire sera le trioxyde $UO_3$. Par réduction, on passera ensuite à $UO_2$ et par action de l'acide fluorhydrique on arrivera à $UF_4$.

Il existe deux moyens pour passer du nitrate d'uranyle en solution à l'oxyde $UO_3$. Une première solution consiste à ajouter de l'ammoniac pour obtenir par précipitation du diuranate d'ammonium (ADU) que l'on décompose thermiquement en $UO_3$. Une seconde solution consiste à décomposer thermiquement le nitrate d'uranyle après déshydratation.

L'oxyde $UO_3$ ne possède pas les mêmes propriétés selon qu'il est obtenu par la première ou la seconde solution. La première solution procure un oxyde très réactif, c'est-à-dire présentant une surface spécifique de l'ordre de 15 $m^2$/g. La seconde solution procure un oxyde qui réagit peu, sa surface spécifique étant de 1 à 2 $m^2$/g.

L'obtention du composé $UF_4$ à partir de l'oxyde $UO_3$ peut se faire selon différents procédés. Un procédé particulièrement intéressant est celui qui utilise un four à lit coulant ou four LC. Ce four, qui combine un four de réduction et un four d'hydrofluoration, permet de réaliser successivement deux réactions. D'abord l'oxyde $UO_3$ réagit à chaud avec de l'ammoniac craqué thermiquement pour être réduit en oxyde $UO_2$, lequel est ensuite mis en contact avec de l'acide fluorhydrique gazeux injecté à contre-courant. A la sortie du four, on obtient le composé $UF_4$. La disposition particulière de la tête du four d'hydrofluoration permet de réaliser un déplacement de la réaction d'équilibre par abaissement progressif de la température et, en conséquence, l'acide fluorhydrique est intégralement absorbé. Parmi les avantages de ce four, on peut inclure la suppression de l'excès d'acide fluorhydrique que l'on ne retrouvera plus dans les effluents.

Le four LC est un appareil efficace à condition de l'alimenter avec de l'oxyde $UO_3$ le plus réactif possible. Un trioxyde d'uranium ayant une surface spécifique comprise entre 12 et 15 $m^2$/g procure, en sortie de four, un produit de caractéristiques satisfaisantes. Ce produit aura typiquement la composition suivante : 96% de $UF_4$, 2% de $UO_2$ et 2% de $UO_2F_2$. Traité dans un réacteur à flamme en présence de fluor, il donnera un hexafluorure d'uranium de qualité satisfaisante.

Le four LC nécessite donc d'être alimenté par un oxyde $UO_3$ de réactivité suffisante. A titre d'exemple, un oxyde $UO_3$ de 5 $m^2$/g de surface spécifique conduit à l'élaboration d'un hexafluorure d'uranium ne répondant pas aux normes industrielles. Dans ces conditions, les fours LC sont alimentés jusqu'à présent par de l'oxyde $UO_3$ obtenu par la première solution citée, c'est-à-dire celle utilisant de l'ammoniac pour obtenir par précipitation du diuranate d'ammonium.

Cette solution présente cependant plusieurs inconvénients. D'une part, elle nécessite la consommation d'ammoniac. D'autre part, la réaction de précipitation fournit également, et en quantités importantes, un deuxième composé qui est le nitrate d'ammonium. A titre d'exemple, pour une production annuelle de 10000 T d'uranium on récupère 4500 T de nitrate d'ammonium. Jusqu'à présent, ce nitrate d'ammonium est vendu comme engrais mais, étant un sous-produit de l'industrie nucléaire, il est fort possible que, dans les prochaines années, bien qu'il ne renferme que quelques ppm d'uranium, il ne puisse plus être commercialisé.

Le problème qui se pose alors pour pouvoir continuer à utiliser les fours LC, qui sont des fours donnant entière satisfaction, est de trouver un procédé d'obtention d'oxyde $UO_3$ très réactif (c'est-à-dire de surface spécifique comprise entre 12 et 15 $m^2$/g) qui ne génère pas de sous-produit. Ce procédé ne devrait pas non plus être consommateur d'autres composés et notamment il ne devrait pas être consommateur d'ammoniac.

Comme il a été dit plus haut, la seconde solution connue pour passer du nitrate d'uranyle en solution à l'oxyde $UO_3$ conduit à un produit inutilisable pour les fours LC. La décomposition thermique du nitrate d'uranyle exige de l'énergie sous forme de chaleur, mais pas de réactif. Ce procédé permet même de récupérer l'acide nitrique par recombinaison des vapeurs nitreuses avec la vapeur d'eau provenant de la déshydratation. Il comprend deux stades : l'évaporation de la solution jusqu'à obtention du sel hexahydraté $UO_2(NO_3)_2$, $6H_2O$ et la décomposition du nitrate vers 500-600°C ou dénitration.

Le demandeur a engagé des travaux pour tenter d'améliorer le stade de dénitration afin d'obtenir un trioxyde suffisamment réactif pour être ensuite traité dans un four LC. A cette occasion, les mécanismes fondamentaux de la dénitration thermique d'un nitrate d'uranyle hexahydraté pour l'obtention d'un $UO_3$ très réactif ont été étudiés. Dans les conditions douces adoptées, impliquant des cinétiques de réactions lentes, il apparaît que la réactivité de l'$UO_3$ est directement corrélée à la pression partielle d'eau régnant au-dessus du solide. Une pression partielle basse, à basse température, permet le découplage nécessaire des étapes de déshydratation et de calcination. La structure feuilletée "active" de l'$UO_3$ se façonne déjà à la déshydratation dont la fin (passage du nitrate d'uranyle dihydraté à l'anhydre) est déterminante et doit être menée avec précaution sous peine de voir le dihydrate bien structuré se dissoudre dans son eau de cristallisation.

Un dispositif pilote a été réalisé sur la base de ces résultats. Cependant, la complexité et le coût de l'installation ont été tels qu'on a renoncé à son exploitation industrielle.

On connaît d'autre part le brevet US-A-3 041 136, déposé le 8 Avril 1960, qui divulgue un procédé de dénitration et de réduction à la flamme de nitrate d'uranyle aqueux en dioxyde d'uranium. Le procédé est mis en oeuvre dans une chambre de réaction et réalise la conversion en dioxyde en une seule étape. La flamme est générée dans un brûleur, placé au sommet de la chambre de réaction, et résulte de la combustion incomplète d'un hydrocarbure gazeux tel que le propane. Elle se propage dans la chambre de réaction. Un dispositif d'alimentation traverse le brûleur dans l'axe de la flamme pour aboutir dans la chambre de réaction et pulvériser le nitrate d'uranyle dans la flamme. Le nitrate d'uranyle n'est admis que lorsque la température en bas du réacteur (c'est-à-dire à sa sortie) atteint 982°C (1800°F). L'appareillage, très simple, paraît séduisant mais la mise au point doit en être difficile car il ne semble pas que les essais aient dépassé le stade expérimental en atelier pilote. Un article faisant référence à ce brevet et intitulé "Production of Uranium Dioxide by Flame Denitration", par W. H. Hedley, R. J. Roehrs et W.T. Trask Jr, paru quelques années plus tard dans I&EC Process Design and Development, Vol. 3, n° 1, Janvier 1964, mentionne d'ailleurs que des travaux supplémentaires sont à prévoir pour résoudre divers problèmes dont la présence de l'oxyde $U_3O_8$ dans le produit résultant.

On connaît également, d'après le document DE-A-38 02 047, un procédé de séparation d'un métal radioactif (par exemple l'uranium) contenu dans un composé de l'uranium. Selon ce procédé, on utilise un brûleur à flamme. La flamme résulte de la combustion d'un gaz combustible dans de l'air. Une solution aqueuse contenant un complexe uranique est pulvérisée dans la flamme. On recueille un dépôt d'oxyde d'uranium dont le type n'est pas précisé.

Dans un tout autre domaine, la société VICARB a développé des procédés faisant intervenir deux phases principales : une phase gazeuse d'une part, occupant un grand volume et possédant aisément une grande énergie thermomécanique, d'autre part une phase dense, en général liquide, de faible volume. Au lieu de pulvériser la phase liquide dans le gaz et indépendamment de celui-ci, comme dans les atomiseurs et brûleurs classiques, l'énergie thermique et mécanique apportée par la phase gazeuse est mise sous forme d'un écoulement tourbillon symétrique pour provoquer le même résultat. Les trajectoires des mélanges élémentaires (un mélange élémentaire étant constitué par une gouttelette de liquide et le gaz l'environnant) qui en résultent, constituent pendant les premiers instants du "contact flash", les génératrices d'un hyperboloïde à une nappe, trajectoires divergentes et ne se recoupant pas. Les propriétés caractéristiques de la zone de ce contact flash peuvent être regroupées sous le nom d'effet Isoflash.

Un premier dispositif d'application de ce procédé, commercialisé par la société VICARB, comporte une chambre, où l'effet Isoflash est exploité, et une tête d'injection des produits de réaction. Un conduit vertical permet d'injecter, à l'entrée de la chambre, la phase liquide. Autour de ce conduit vertical est prévu un panier perforé à entrée tangentielle unique de la phase gazeuse. Les perforations du panier constituent, à l'intérieur de la tête d'injection, un grand nombre d'entrées tangentielles élémentaires régulièrement réparties et formant un système d'isorépartition du gaz chaud injecté. Ce panier perforé aboutit à l'entrée de la chambre où débute la zone de contact "flash" entre les deux phases. Le contact flash est alors très rapide (une fraction de seconde).

Un deuxième dispositif a été conçu par la société VICARB. Pour éviter les parois chaudes, toutes les parois sont refroidies, la tête est alimentée en air froid et comporte une couronne alimentée en gaz combustible. La combustion de ce gaz est réalisée totalement dans la tête d'injection qui joue le rôle de brûleur. Les gaz de combustion résultants pénètrent dans la chambre en écoulement tourbillon symétrique pour réaliser le contact flash avec la phase liquide.

Dans ces dispositifs, l'ensemble des phénomènes physiques qui se déroulent en environ un millième de seconde au sein du couple "donneur-receveur" d'énergie thermomécanique comprend en particulier la création et le départ d'une microgoutte, choc par transfert d'énergie cinétique, vibration propre, rotation, tous effets procurant un dopage du transfert de masse et de chaleur et bien sûr vaporisation flash dont l'effet endothermique local protège le produit sec résultant. A titre d'exemple, les gaz de combustion peuvent perdre 1000°C en 30 cm de distance et la phase dense s'échauffer de 60°C. Ces dispositifs sont particulièrement bien adaptés au séchage de produits agroalimentaires et pharmaceutiques. Ils permettent d'obtenir une poudre très fine et ne dégradent pas les produits biologiques.

Les inventeurs ont alors pensé à utiliser l'effet Isoflash pour la préparation de trioxyde d'uranium bien que leur domaine technique soit très éloigné du séchage des produits agroalimentaires ou pharmaceutiques.

Les études lancées par le demandeur sur la dénitration ont montré, comme il a été dit plus haut, que les étapes de déshydratation et de calcination du nitrate d'uranyle doivent normalement être menées très délicatement si on veut obtenir une structure réactive. En fait, leur idée était d'utiliser l'un des dispositifs de la société VICARB décrits plus haut pour simplement déshydrater le nitrate d'uranyle hexahydraté avant de le calciner par une autre méthode. Après expérimentation, les inventeurs ont alors remarqué que non seulement la déshydratation se réalisait correctement, mais qu'ils pouvaient en outre réaliser la conversion en trioxyde d'uranium au cours de la même opération et que ce trioxyde était très réactif. Il semble établi maintenant que, compte tenu des conditions propres à l'effet Isoflash, la redissolution du trioxyde d'uranium dans son eau de cristallisation (avec destruction de la structure active) ne peut pas avoir lieu lors de l'étape clef de fin de déshydratation. La cinétique de cette redissolution est trop lente pour que celle-ci intervienne.

Les expérimentations effectuées sur un dispositif pilote se sont avérées entièrement concluantes, l'oxyde $UO_3$ obtenu étant au moins aussi réactif que celui produit par la solution nécessitant la précipitation du diuranate d'ammonium.

L'invention a donc pour objet un procédé d'obtention de trioxyde d'uranium à partir d'une solution de nitrate d'uranyle, le trioxyde obtenu devant présenter une surface spécifique comprise sensiblement entre 12 et 15 $m^2/g$, consistant à réaliser dans une zone d'une chambre de réaction dite zone de contact, un contact thermomécanique entre la solution de nitrate d'uranyle, pulvérisée en fines gouttelettes selon un axe donné dans la zone de contact, et un fluide gazeux introduit dans la zone de contact sous la forme d'un écoulement tourbillon autour dudit axe de pulvérisation de la solution de nitrate d'uranyle, le fluide gazeux étant à une température suffisamment élevée et possédant une énergie mécanique suffisamment élevée pour réaliser, dans la zone de contact, la déshydratation et la calcination du nitrate d'uranyle, la solution de nitrate d'uranyle n'étant jamais en contact avec une flamme.

L'expérimentation a montré que le procédé fonctionne pour des solutions possédant une concentration en nitrate d'uranyle comprise entre 350 et 1200 g/l.

Le fluide gazeux peut être constitué de gaz de combustion, par exemple des gaz résultant de la combustion d'un hydrocarbure gazeux et de l'air.

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 représente un dispositif permettant de mettre en oeuvre le procédé selon l'invention d'obtention de trioxyde d'uranium par dénitration thermique directe de nitrate d'uranyle,
- la figure 2 est une vue en coupe et de détail d'un élément du dispositif représenté à la figure 1,
- la figure 3 est une vue en coupe selon l'axe III-III de la figure 2.

A titre d'exemple, la suite de la description portera sur une solution de nitrate d'uranyle constituée de nitrate d'uranyle hexahydraté.

Selon l'invention, on décompose thermiquement le nitrate d'uranyle hexahydraté en trioxyde d'uranium de la manière suivante :

$$UO_2(NO_3)_2, 6\,H_2O \rightarrow UO_3 + 1,86\,NO_2 + 0,14\,NO + 0,57\,O_2 + 6\,H_2O$$

La chaleur nécessaire à la réaction peut, par exemple, être apportée par la combustion du propane et de l'air :

$$C_3H_8 + 5\,O_2 \rightarrow 3\,CO_2 + 4\,H_2O$$

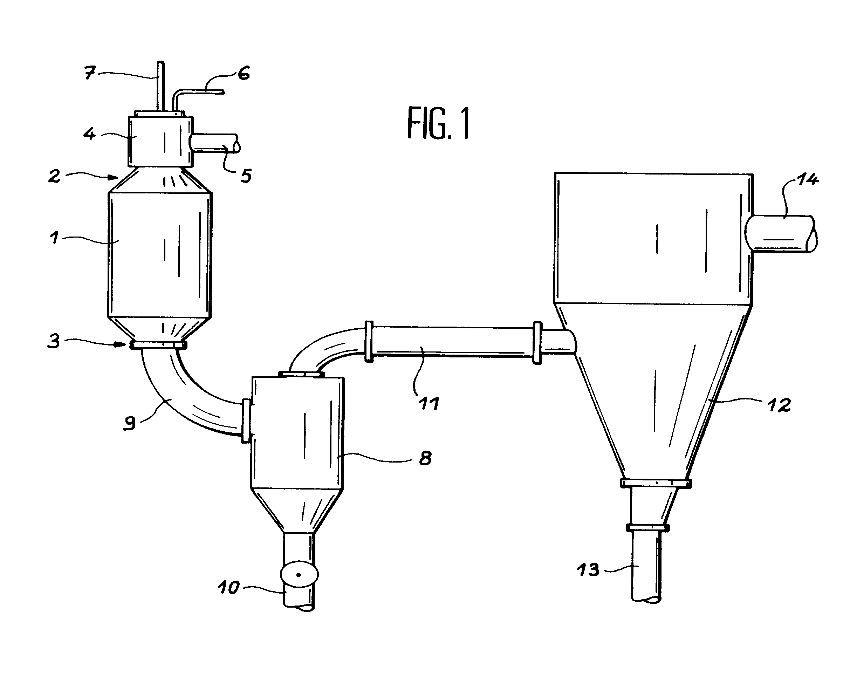

Le dispositif représenté à la figure 1 comprend une chambre de réaction 1 délimitée par une enveloppe cylindrique prolongée à chaque extrémité par un cône réduisant les sections d'entrée 2 et de sortie 3 de la chambre de réaction. L'entrée 2 est reliée à un brûleur 4 alimenté en air par la canalisation 5 et en gaz combustible par la canalisation 6. Une canalisation 7 permet d'alimenter la chambre de réaction 1 en nitrate d'uranyle hexahydraté.

La sortie 3 de la chambre de réaction 1 est connectée à un cyclone 8 par l'intermédiaire d'une conduite 9. Les plus grosses particules d'$UO_3$ formées sont récupérées par la conduite 10 connectée à la sortie basse du cyclone 8. Les fines particules sont véhiculées par les évents gazeux en haut du cyclone et sont envoyées par l'intermédiaire de la conduite 11 vers un filtre à manches 12. Les fines particules sont récupérées par la conduite 13. Les gaz dépoussiérés sont aspirés, grâce à un ventilateur situé en sortie du filtre, par une conduite 14.

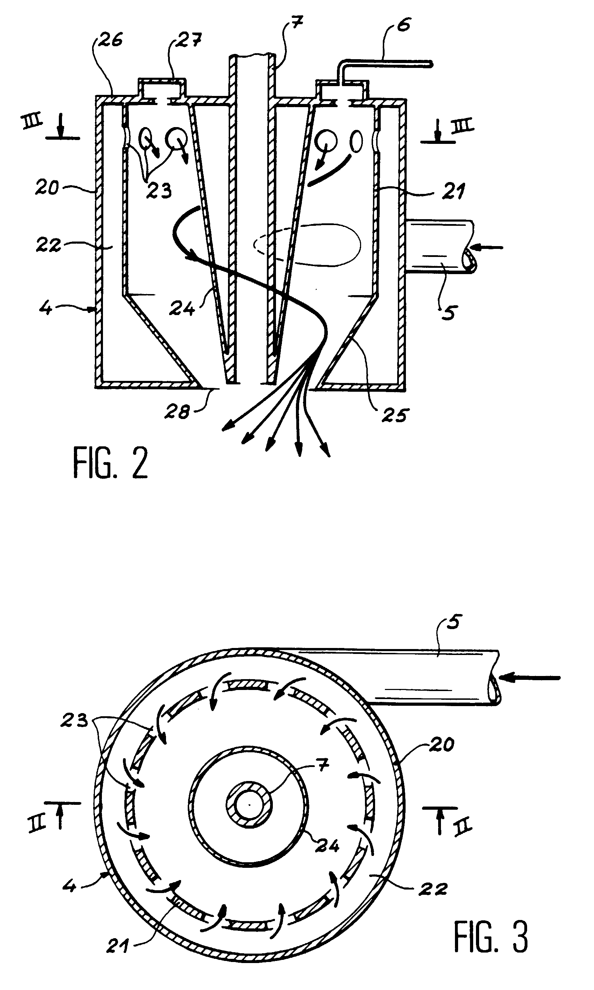

Les figures 2 et 3 montrent la constitution du brûleur 4. Toutes les parois du brûleur sont refroidies par une circulation d'eau non représentée. Le brûleur comporte une enveloppe extérieure cylindrique 20 fermée à sa partie supérieure et présentant à sa partie inférieure une ouverture 28 communiquant avec l'entrée 2 de la chambre de réaction 1 (voir la figure 1). Il comporte également une enveloppe intérieure ou panier 21 délimitant avec l'enveloppe extérieure un espace annulaire 22. Le panier 21 est percé en partie haute d'une rangée de trous 23 faisant tout le tour du panier. La canalisation 5 communique tangentiellement avec l'espace annulaire 22.

La canalisation 7 traverse le brûleur de part en part pour aboutir à son ouverture 28, c'est-à-dire à l'entrée de la chambre de réaction. Un tronc de cône 24, pointant vers le bas, relie la partie supérieure de l'enveloppe 20 à l'extrémité de la canalisation 7 située dans l'ouverture 28. Il contribue, avec la partie 25 en forme de buse de l'enveloppe intérieure 21, à donner aux gaz de combustion le mouvement désiré.

La face supérieure 26 de l'enveloppe extérieure 20 comporte une couronne 27 d'alimentation en gaz combustible, la canalisation 6 débouchant au fond de cette couronne.

On va décrire maintenant un mode de préparation de trioxyde d'uranium à partir de nitrate d'uranyle hexahydraté par le procédé selon l'invention et en utilisant le dispositif décrit par les figures 1 à 3.

Le nitrate d'uranyle hexahydraté est contenu dans une cuve calorifugée où il est maintenu en agitation. Sa température de fusion étant égale à 65°C, la cuve est chauffée par un serpentin interne pouvant être alimenté en vapeur ou en eau refroidie. Le nitrate d'uranyle hexahydraté est préparé selon les caractéristiques suivantes : concentration en uranium autour de 1200 g/l, densité autour de 2400 kg/m$^3$, température autour de 80°C. La densité de la solution est contrôlée par un densimètre. Un apport en eau déminéralisée est possible dans la cuve pour diluer la solution si la densité est trop élevée. Toutes les tuyauteries d'amenée du nitrate vers le brûleur sont calorifugées et tracées à la vapeur pour éviter la cristallisation du nitrate.

Le gaz combustible utilisé peut être du propane alimentant le brûleur sous une pression de 1,4 bar environ. L'air est apporté par un surpresseur à une pression comprise entre 0,3 et 0,6 bar relatif.

Le brûleur assure la combustion du propane (environ 5 kg/h) dans l'air surpressé (environ 150 kg/h) par excitation d'une bougie d'allumage non représentée dans les figures. La combustion est entièrement réalisée dans le brûleur ce qui fait que le nitrate d'uranyle injecté n'est jamais en contact avec la flamme. Comme le montrent les flèches sur les figures 2 et 3, l'air injecté dans le brûleur acquiert un mouvement en tourbillon. Ceci est dû à la géométrie particulière du brûleur : alimentation tangentielle en air, présence d'un panier percé et forme conique de certains éléments. Ce mouvement acquis par l'air est également donné au gaz combustible et aux gaz de combustion s'échappant par la sortie 28 et entrant dans la chambre de réaction. Les gaz résultant de la combustion, d'une température d'environ 1400°C, sont accélérés dans le brûleur pour atteindre une vitesse d'environ 300 m/s dans la partie conique supérieure de la chambre de réaction 1 qui est la zone de réaction. La partie de la canalisation 7 interne au brûleur est refroidie à l'eau sous pression, d'environ 1,5 m$^3$/h de débit. La température de l'eau de refroidissement s'élève ainsi de 25°C à 32°C au passage dans le brûleur.

Dans la chambre de réaction, encore appelée bicône, s'effectue la mise en contact des gaz de combustion chauds et du nitrate d'uranyle hexahydraté. Le nitrate est pulvérisé en fines gouttelettes en haut du bicône et la réaction a lieu dès la mise en contact avec les gaz. Le volume restant du bicône permet l'évaporation de l'eau et la formation de particules d'UO$_3$.

La vitesse du moteur de la pompe volumétrique utilisée pour injecter le nitrate est asservie à la température interne en bas du bicône. A ce niveau, cette température est comprise entre 350°C et 500°C. C'est la montée en température des gaz chauds lors de l'allumage qui déclenche la pompe.

Les plus grosses particules d'UO$_3$ formées sont récupérées par cyclonage en sortie de bicône. Les fines particules sont transmises par la conduite 11 vers le filtre à manches 12. La température maximale des gaz chargés en solides, admissible pour les manches étant de 140°C, les évents gazeux en haut du cyclone 8 sont refroidis à l'air (environ 300 kg d'air par heure). Les gaz dépoussiérés et aspirés en sortie du filtre 12 sont traités dans des tours d'abattage où les vapeurs nitreuses sont lavées à l'eau et neutralisées dans la soude.

## Revendications

1. Procédé d'obtention de trioxyde d'uranium à partir d'une solution de nitrate d'uranyle, le trioxyde obtenu devant présenter une surface spécifique comprise sensiblement entre 12 et 15 m$^2$/g, consistant à réaliser dans une zone d'une chambre de réaction (1) dite zone de contact, un contact thermomécanique entre la solution de nitrate d'uranyle, pulvérisée en fines gouttelettes selon un axe donné dans la zone de contact, et un fluide gazeux introduit dans la zone de contact sous la forme d'un écoulement tourbillon autour dudit axe de pulvérisation de la solution de nitrate d'uranyle, le fluide gazeux étant à une température suffisamment élevée et possédant une énergie mécanique suffisamment élevée pour réaliser, dans la zone de contact, la déshydratation et la calcination du nitrate d'uranyle, la solution de nitrate d'uranyle pulvérisé n'étant jamais en contact avec une flamme.

2. Procédé selon la revendication 1, caractérisé en ce que ladite solution possède une concentration en nitrate d'uranyle comprise entre 350 et 1200 g/l.

3. Procédé selon la revendication 1, caractérisé en ce que ladite solution est constituée de nitrate d'uranyle hexahydraté.

4. Procédé selon l'une quelconque des revendications 1 à 3, caractérisé en ce que le fluide gazeux est constitué de gaz de combustion.

5. Procédé selon la revendication 4, caractérisé en ce que le fluide gazeux est le produit d'une combustion complète.

6. Procédé selon l'une des revendications 4 ou 5, caractérisé en ce que le fluide gazeux est constitué des gaz résultant de la combustion d'un hydrocarbure gazeux et de l'air.

7. Procédé selon la revendication 6, caractérisé en ce que ledit hydrocarbure est du propane.

8. Procédé selon l'une quelconque des revendications précédentes, caractérisé en ce que l'alimentation de la chambre de réaction en solution de nitrate d'uranyle est asservie à la température interne régnant dans une zone de la chambre de réaction différente de la zone de contact.

**Patentansprüche**

1. Verfahren zur Gewinnung von Urantrioxid aus einer Lösung von Uranylnitrat, wobei das erhaltene Urantrioxid eine im wesentlichen zwischen 12 und 15 m$^2$/g liegende spezifische Oberfläche aufweisen soll, darin bestehend, in einem Bereich eines Reaktionsraums (1), Kontaktzone genannt, einen thermisch-mechanischen Kontakt herzustellen zwischen der Lösung von Uranylnitrat, in Richtung einer in der Kontaktzone vorgegebenen Achse in feine Tröpfchen zerstäubt, und einem gasförmigen Fluid, das in die Kontaktzone in Form einer Strömung, die um genannte Achse der zerstäubung der Uranylnitratlösung einen Wirbel bildet, zugeführt wird, wobei das gasförmige Fluid auf einer genügend hohen Temperatur ist und eine genügend hohe mechanische Energie besitzt, um in der Kontaktzone die Dehydratation und Calcination des Uranylnitrats zu bewirken, und wobei die zerstäubte Uranylnitratlösung niemals mit einer Flamme in Kontakt ist.

2. Verfahren nach Anspruch 1, dadurch gekennzeichnet, daß die genannte Lösung eine Konzentration von Uranylnitrat zwischen 350 und 1200 g/l besitzt.

3. Verfahren nach Anspruch 1, dadurch gekennzeichnet, daß die genannte Lösung aus Uranylnitrat-hexahydrat besteht.

4. Verfahren nach einem der Ansprüche 1 bis 3, dadurch gekennzeichnet, daß das gasförmige Fluid aus Verbrennungsgas besteht.

5. Verfahren nach Anspruch 4, dadurch gekennzeichnet, daß das gasförmige Fluid das Produkt einer vollständigen Verbrennung ist.

6. Verfahren nach einem der Ansprüche 4 und 5, dadurch gekennzeichnet, daß das gasförmige Fluid aus Gasen besteht, die aus der Verbrennung eines gasförmigen Kohlenwasserstoffs und der Luft hervorgehen.

7. Verfahren nach Anspruch 6, dadurch gekennzeichnet, daß der genannte Kohlenwasserstoff Propan ist.

8. Verfahren nach einem der vorhergehenden Ansprüche, dadurch gekennzeichnet, daß die Versorgung des Reaktionsraums mit Uranylnitratlösung in Abhängigkeit von der Innentemperatur geregelt wird, welche in einem von der Kontaktzone verschiedenen Bereich des Reaktionsraums herrscht.

**Claims**

1. Process for obtaining uranium trioxide from a uranyl nitrate solution, the trioxide obtained having to have a specific surface between 12 and 15 m$^2$/g, consisting of performing in a zone of a reaction chamber (1), called the contact zone, a thermomechanical contact between the uranyl nitrate solution, atomized into fine droplets along a given axis in the contact zone, and a gaseous fluid introduced into the contact zone in the form of a turbulent flow about said atomization axis of the uranyl nitrate solution, the gaseous fluid being at a sufficiently high temperature and having a sufficiently high mechanical energy to effect, in the contact zone, the dehydration and calcination of the uranyl nitrate, the uranyl nitrate solution never being in contact with a flame.

2.  Process according to claim 1, characterized in that said solution has a uranyl nitrate concentration between 350 and 1200 g/l.

3.  Process according to claim 1, characterized in that said solution is constituted by hexahydrated uranyl nitrate.

4.  Process according to any one of the claims 1 to 3, characterized in that the gaseous fluid is constituted by combustion gases.

5.  Process according to claim 4, characterized in that the gaseous fluid is the product of a complete combustion.

6.  Process according to one of the claims 4 or 5, characterized in that the gaseous fluid is constituted from the gases resulting from the combustion of a gaseous hydrocarbon and air.

7.  Process according to claim 6, characterized in that said hydrocarbon is propane.

8.  Process according to any one of the preceding claims, characterized in that the supply of the reaction chamber with uranyl nitrate solution is dependent on the internal temperature prevailing in a zone of the reaction chamber different from the contact zone.

FIG.1

FIG. 2

FIG. 3